# EUROPÄISCHE PATENTSCHRIFT

(11) **EP 1 852 239 B1**
(45) Veröffentlichungstag und Bekanntmachung des Hinweises auf die Patenterteilung: **17.07.2013**
(21) Anmeldenummer: 07007707.8
(22) Anmeldetag: 16.04.2007
(51) Int. Cl.: B29C 51/02, B29C 37/00, B29C 51/00, B29C 33/60, B29C 51/26, B29C 33/58, B29C 41/30, G06T 17/10, G06T 3/00, G03F 1/00, B41M 1/40

(54) **Verfahren zum Erzeugen einer dreidimensionalen Freiformfläche mit haptisch und/oder optisch wahrnehmbaren Mikrostrukturen**
Method for creating a three dimensional freeform surface with haptically and/or optically observable microstructures
Procédé destiné à la production d'une surface de forme libre en trois dimensions avec des microstructures haptiques et/ou optiques perceptibles

(30) Priorität: 04.05.2006 DE 102006020667
(43) Veröffentlichungstag der Anmeldung: 07.11.2007
(60) Teilanmeldung: 11003427.9
(73) Patentinhaber: K1 GmbH, 48691 Vreden-Lünten (DE)
(72) Erfinder: Saueressig, Kilian, 48691 Vreden (DE)
(74) Vertreter: Tönhardt, Marion

(56) Entgegenhaltungen:
- EP-A2- 0 393 767
- WO-A-02/43946
- WO-A2-2006/042319
- DE-A1- 2 055 068
- FR-A- 1 252 029
- GB-A- 2 085 798
- JP-A- 2 090 275
- JP-U- H01 115 528
- US-A1- 2005 146 073

## Beschreibung

Die Erfindung betrifft ein Verfahren zum Erzeugen einer dreidimensionalen Freiformfläche mit haptisch und/oder optisch wahrnehmbaren Mikrostrukturen, wobei die Mikrostrukturen als Datensatz festgehalten sind.

Aus dem Stand der Technik sind Wege bekannt, dreidimensionale Oberflächen mit Strukturen zu versehen, die jedoch oftmals nicht hohen qualitativen Anforderungen genügen, was Maßhaltigkeit, für den Betrachter erkennbare Verzüge oder Verzerrungen betrifft. Bekannt sind beispielsweise Verfahren, die mittels Triangulation eine dreidimensionale Oberfläche auf einer dreidimensionalen Freiformfläche erzeugen. Allerdings können sich damit keine Narbstrukturen darstellen lassen, wie sie zum Beispiel bei einer Kuhhaut auftreten, da es sich hier um großflächige Narbungen mit durchgehenden Verästelungen handelt, die organisch gewachsen sind. Bei komplexeren Verfahren werden Verzerrungen in einem mehrstufigen Prozess korrigiert und auch Korrekturen der Narbung empirisch wiederholt vorgenommen werden.

Aus der WO 02/43946 A1, der WO 2006/042319 A2 sowie der US 2005/146073 A1 ist jeweils ein Verfahren zum Erzeugen einer dreidimensionalen Freiformfläche mit haptisch oder optisch wahrnehmbaren Mikrostrukturen gemäß dem Oberbegriff des Patentanspruchs 1 bekannt. Darüber hinaus beschreiben die GB 2 085 798 A sowie die FR 1 252 029 A jeweils ein gattungsgemäßes Verfahren, bei dem Folien oder Vorformlinge, die tiefgezogen werden sollen, einen geschwächten Randbereich aufweisen, um dadurch die Wanddicke der geformten Bauteile zu beeinflussen, oder um Material einzusparen.

Die Erfindung arbeitet nun mit mindestens einer virtuellen oder reellen elastischen Folie, für die zunächst im Formprozess der Freiformfläche hervorgerufenen Dehnungen und Stauchungen in der elastischen Folie bestimmt werden. Der Datensatz wird dann modifiziert, so dass die Dehnungen und Stauchungen zumindest teilweise kompensiert werden. Anschließend wird bei einer mit dem modifizierten Datensatz strukturierten elastischen Folie auf Verzerrungen in den Mikrostrukturen überprüft und gegebenenfalls der Datensatz erneut modifiziert, bis ein endgültiger Datensatz erhalten ist. Mit diesem digitalen Datensatz wird dann die elastische Folie strukturiert, so dass mindestens eine strukturtragende Fläche auf der Folie erzeugt wird. Erfindungsgemäß wird die Folie in Randbereichen, die später nicht das Bauteil bedecken, ebenfalls mit einem tiefenvariablen und breitenvariablen Profil versehen. Dieser geschwächte Randbereich nimmt einen Großteil der Dehnung auf, die somit nicht mehr in den strukturtragenden Bereich der Folie fällt.

Weiterhin wird der Randbereich mit einer weiteren Freiformfläche, die ein tiefen- und breitenvariables Profil aufweist, versehen, die so ausgelegt ist, dass die Folie in allen Richtungen die gleiche Dehnstrecke zurücklegen muss.

Die Erfindung beruht auf der Erkenntnis, dass die Verzüge und Verzerrungen bei mikrostrukturierten dreidimensionalen Oberflächen dann nicht wahrnehmbar sind, wenn die Folie weitgehend spannungsrelaxiert ist. Das Verfahren kann auch mit bedruckten Folien angewendet werden, wobei die Farbe als rein optische Information analog wie die haptischoptische Dessinstruktur bzw. Narbstruktur behandelt wird.

Um ein Bauteil oder Formteil mit einer hochwertigen dreidimensionalen Oberfläche herstellen, wird also zunächst eine elastische Folie mittels Laserstrahlung strukturiert oder von einer Walze oder Platte, die zuvor mittels Laserstrahlung strukturiert wurde, abgeformt. Der Datensatz ist dabei an die Freiformfläche des Bauteils angepasst. Nun erfolgen zahlreiche Modifikationen des Datensatzes, so dass eine Verzerrung beispielsweise der Narbstruktur für den Betrachter nicht mehr sichtbar ist und auch großflächige Narbstrukturen mit zahlreichen Verästelungen darstellbar sind.

Grundsätzlich können die haptisch und/oder optisch wahrnehmbaren Mikrostrukturen auf beiden Seiten der Folie angebracht werden. So können sich beispielsweise bei der Verwendung transparenter Folien Farbeffekte erzielen lassen. Die Bedruckung kann mittels Siebdruck, Tiefdruck, Flexodruck, Digitaldruck oder Reliefdruck erfolgen.

Wenn mit reellen elastischen Folien gearbeitet wird, erfolgt die Herstellung des gewünschten Bauteils oftmals in einem Tiefziehprozess, bei dem die elastische Folie auf ein Werkzeug so aufgespannt wird, dass die strukturtragende Fläche dem Werkzeug zugewandt ist. Dies hat den Vorteil, dass unterschiedliche Foliendicken keinen Einfluss auf die Maßhaltigkeit des entstehenden Formteils haben. Dann wird eine Druckdifferenz zwischen der Seite der strukturtragenden Fläche der elastischen Folie und deren rückseitiger Fläche erzeugt, so dass die elastische Folie in Richtung auf das Werkzeug gezogen wird. Bevorzugt ist es, die Druckdifferenz durch Anlegen von Vakuum zu erzeugen, denn da die strukturierte Fläche

dem Werkzeug zugewandt ist, kann das Vakuum gut über die gesamte Folienoberfläche wirken. Es kann aber auch mit einer Druckbeaufschlagung gearbeitet werden.

Für den Tiefziehprozess ist es nun erfindungsgemäß nötig, die unterschiedliche Dehnung der elastischen Folie nach dem Aufspannen auf das Bauteil beim Tiefziehen zu berechnen. Die Stellen mit einer sehr starken Dehnung werden im Datensatz für die Laserung entsprechend gestaucht und umgebende Bereiche gedehnt. Das Gleiche gilt für die Tiefenkorrektur, so werden Bereiche mit starker Dehnung mit einer größeren Tiefe versehen als Bereiche mit geringerer Dehnung. Stauchung und Dehnung haben dabei eine Größenordnung von etwa 10 bis 30 %. Größere Stauchungen führen zu Veränderungen der Narbstruktur, die nachher für den Betrachter sichtbar sind und als Verzerrungen oder Unschärfe erkannt werden.

Da bei einem Tiefziehprozess Dehnungen von einigen 100 % oder mehr auftreten können, sind weitere Schritte erforderlich, um eine für den Betrachter verzerrungsfreie Bauteiloberfläche zu erzeugen. Hierzu kann die Rückseite der Folie wenigstens bereichsweise mit einer dreidimensionalen Makrostruktur versehen werden, die dem Dehnungsprofil entspricht. Die Dicke der Folie ist dabei um so stärker, je höher die beim Tiefziehprozess zu erwartende Dehnung ist.

Als weiterer Schritt kann über einen speziellen Prozess die Reibung zwischen elastischer Folie und Werkzeug reduziert werden, so dass sich eine relativ homogene Spannung in der Folie ausbildet.

Einfachste Maßnahme ist dabei, ein reibungsminderndes Fluid zwischen Folie und Werkzeug zu bringen. Geeignet sind Luft oder Öl. Das reibungsmindernde Fluid kann ein aushärtbares Fluid sein, welches nach abgeschlossener Spannungsrelaxation der Folie ausgehärtet wird. Das aushärtbare Fluid kann auch Trennmittel enthalten, das mit Keramikpigmenten versehen ist, oder elektrisch leitende Mittel, um ein späteres Entformen oder Beschichten zu vereinfachen.

Eine weitere Maßnahme kann darin, bestehen in Teilbereichen der Grenzfläche zwischen Folie und Werkzeug ein oder mehrere Gleitpolster zu erzeugen. Dazu wird das Werkzeug beispielsweise mit zahlreichen Bohrungen versehen, die in der Grenzfläche zwischen Folie und Werkzeug münden, welche mit einem Fluid beaufschlagt werden, um so das Vakuum an diesen Stellen zu reduzieren. Die Folie kann sich wegen der verminderten Reibung relaxieren, so dass eine sehr homogene Spannungsverteilung erzeugt werden kann.

Als mathematisches Instrument hat sich die Finite-Element-Berechnung bewährt, die dann sowohl die Verzerrung der haptischen und/oder optischen Mikrostrukturen als auch das Rückseitenprofil der zu lasernden elastischen Folie berücksichtigt. Dabei wird die Berechnung mit veränderten Parametern so lange wiederholt, bis das optimale Ergebnis vorliegt.

Bei einer speziellen Ausführungsform kann, wenn die Spannungsreduzierung optimiert wird, auf Schritte wie partielles Stauchen, Dehnen oder dergleichen verzichtet werden und dennoch ein gutes Ergebnis erzielt werden, da die Verzerrung der Mikrostrukturen über den Tiefziehprozess weitgehend proportional zu den Spannungsunterschieden innerhalb der Folie ist. Dabei wird lediglich eine über die Folie homogene Verzerrung angelegt, nämlich die Flächen- und Tiefenanpassung, die in allen Bereichen gleich ist. Die Berechnung über finite Elemente kann entfallen. Lediglich die Grunddehnung der Folie muss ermittelt werden.

Das erfindunsgemäße Verfahren kann allgemein bei der Herstellung von geprägten Folien eingesetzt werden. Dabei wird in der Regel die Vorderseite das Dessin tragen, die Rückseite das Dickenprofil. Diese dreidimensionale Makrostruktur auf der Rückseite kann mittels Schaum oder einer Polymerschicht mit deutlich geringerem Elastizitätsmodul als dem der Folie, die die Dessinstruktur trägt, geglättet werden. Das ermöglicht den Einsatz der Folie beim Bespannen von Bauteilen.

Die Rückseite der Folie kann zu besseren adhäsiven Anbindung mit einer entsprechenden rauhen Oberfläche versehen werden. Diese Aufrauhung kann beispielsweise durch eine Rückseitenprägung oder Laserung erfolgen.

Die Ausführungsform mit einer variablen dreidimensionalen Makrostruktur auf der Rückseite der Folie ist besonders geeignet für Folien, die für das Tiefziehen von Funktionsbauteilen mit unterschiedlichen Bauteilgeometrien eingesetzt werden. In diesem Fall muss nämlich nur bei einem beidseitigen rotativen Prägeprozess diejenige Walze ausgetauscht werden, die die Rückseitenprägung vermittelt, d. h. die Prägung, die der Folie eine unterschiedliche Dicke entsprechend der späteren Dehnung verleiht.

Im Folgenden soll die Erfindung anhand der Zeichnung näher erläutert werden. Es zeigt:
- Figur 1: in Teilbildern a und b eine elastische Folie mit einem virtuellen Gitternetz vor und nach einem Tiefziehprozess;
- Figur 2: in schematischer Querschnittdarstellung eine direktstrukturierte Folie, die tiefgezogen werde soll;
- Figur 3: eine schematische Darstellung, die die Auswirkung unterschiedlicher Reibung auf die Dehnung der Folie darstellt;
- Figur 4: die tiefgezogene Folie im Werkzeug;
- Figur 5: eine Modifikation der Folie mit rückseitig aufgebrachter dreidimensionaler Makrostruktur;
- Figur 6: den Dehnungsverlauf der Folie mit der Makrostruktur;
- Figur 7: das Ergebnis mit optimierter Profilierung der Folie;
- Figur 8: eine weitere Ausführungsform für die Gestaltung des Rückseitenprofils der Folie;
- Figur 9: den Einsatz der Vakuumreduktion zur Reibungsverminderung;
- Figur 10: das durch Vakuumreduktion erzeugte Gleitpolster zur Reibungsverminderung;
- Figur 11: die fertiggestellte tiefgezogene Folie, mit einer Hinterfütterung versehen; und
- Figur 12: das fertige Formteil.

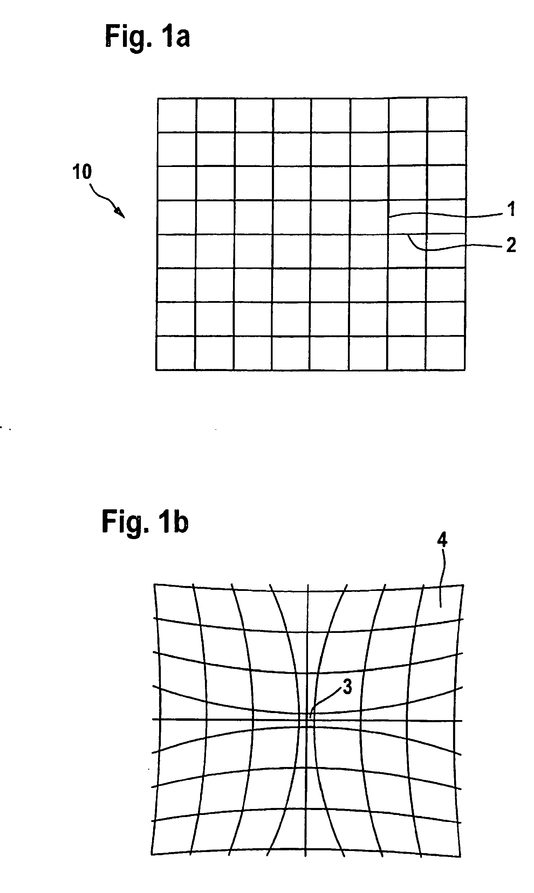

Figur 1a zeigt eine elastische Folie 10, auf die ein virtuelles Gitternetz aus im Wesentlichen parallelen und orthogonal zueinander verlaufenden Linien 1, 2 aufgetragen ist. Bei einem späteren Tiefziehprozess, in Figur 1b veranschaulicht, werden Stellen 3 mit einer hohen Dehnung gestaucht und Stellen 4 mit einer geringen Dehnung gedehnt. Der Datensatz beispielsweise einer Narbenstruktur wird entsprechend angepasst und kann nun zum Beispiel über eine Laserstrukturierung in die Folie übertragen werden.

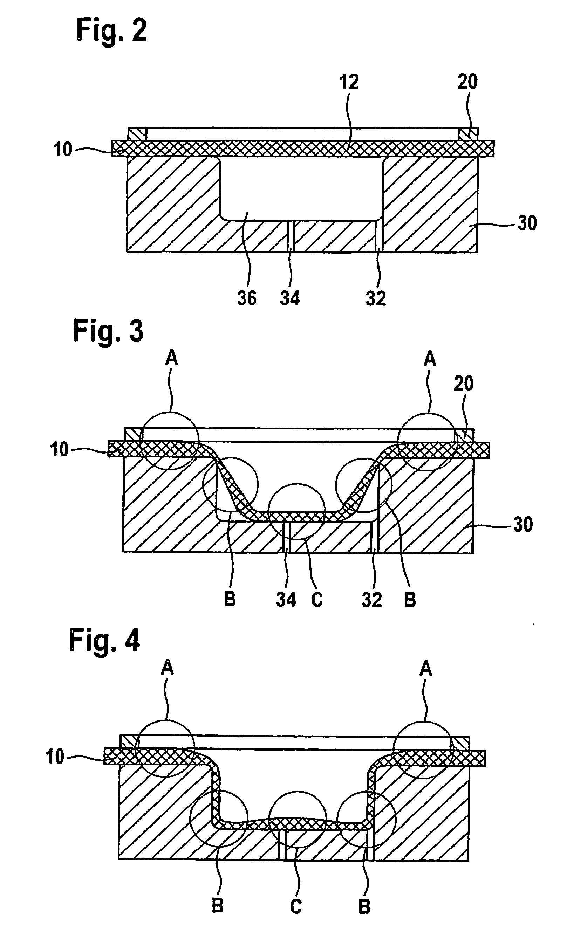

In Figur 2 wird anhand eines Tiefziehprozesses veranschaulicht, wie eine strukturierte Folie 10 weiter bearbeitet wird. Die Folie 10 wird mit ihrer strukturierten Flächen 12 zu einem vorbereiteten Werkzeug 30 weisend mittels eines umlaufenden Rahmens 20 auf das Werkzeug 30 gespannt. Der unter der Folie 10 liegende Raum des Werkzeugs 30 wird nun beispielsweise über Röhren 32, 34 mit Vakuum beaufschlagt. Anstelle der Vakuumbeaufschlagung kann auch von der freiliegenden Oberseite der Folie 10 her ein Druck aufgegeben werden. Die Folie 10 wird bei wirkendem Vakuum zunächst in den Bereichen A auf die Oberfläche des Werkzeugs 30 treffen, dort, wo die Folie 10 in Kontakt der Oberfläche des Werkzeugs 30 gerät, entsteht Reibung zwischen der Folie 10 und der Oberfläche des Werkzeugs, die einer weiteren Dehnung der Folie 10 in den Bereichen A entgegenwirkt. Entsprechendes gilt, wenn die Folie 10 im Bereich C am Boden des Werkzeugs 30 anliegt. Die Bereiche B der Folie 10, die noch keinen Kontakt zur Oberfläche des Werkzeugs 30 haben, dehnen sich dementsprechend mehr.

Figur 4 zeigt das Ergebnis. Die Folie 10 ist in den Bereichen A am wenigsten gedehnt, d. h. am dicksten, stärker gedehnt im Bereich C und am meisten in Bereichen B. Diese unterschiedlichen Dehnungen sind nicht erwünscht und sollten kompensiert werden.

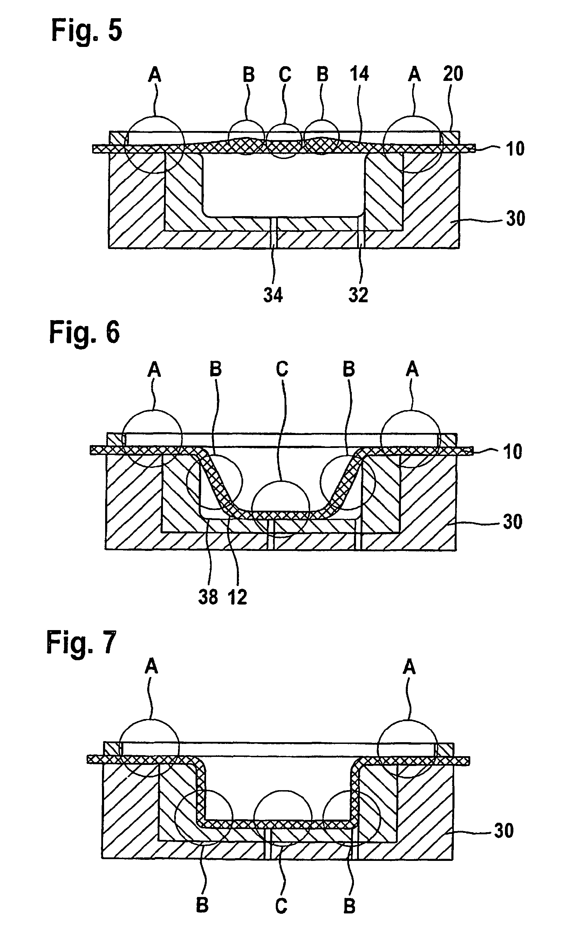

Dazu wird, wie in Figur 5 dargestellt, die Folie 10 unterschiedlich dick gestaltet, wobei die Dicke in den Bereichen B, die später beim Tiefziehen am stärksten gedehnt werden, in entsprechend größerer Dicke ausgelegt werden. Die Bereiche A werden am wenigsten gedehnt und weisen daher die geringste Dicke auf. Entsprechend liegt die Dicke der Folie 10 im Bereich C zwischen der Dicke in den Bereichen A und der in den Bereichen B. Wenn wieder mit Vakuum durch die Öffnungen 32 und 34 oder mit Druck auf die freiliegende Oberseite der Folie beaufschlagt wird, ist nun, wie in Figur 6 zu sehen, die Dehnung innerhalb der Folie 10 viel homogener als zuvor. Zusätzlich kann das Werkzeug 30 an seiner Oberfläche 38 oder auch die strukturierte Fläche 12 der Folie 10 mit einem Gleitmittel versehen werden, um so die Reibung zwischen Folie 10 und Werkzeug 30 zu verringern. Da im Übrigen die Fläche 12 der Folie 10 die Dessinstruktur trägt, kann das Vakuum gut über die gesamte Fläche der Folie 10 wirken.

Figur 7 zeigt, wie durch die Spannungshomogenisierung in der Folie 10 diese in ihrem gesamten Verlauf eine gleichförmige Dicke aufweist.

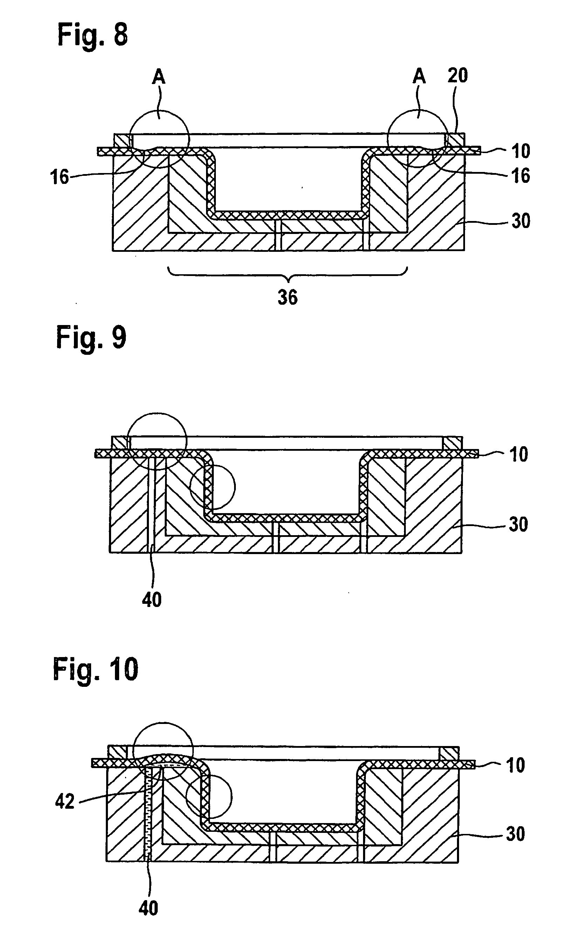

Figur 8 zeigt, wie der Effekt der Spannungshomogenisierung durch weitere Maßnahmen noch vergrößert werden kann. So kann beispielsweise in dem Bereich A unmittelbar innerhalb des Rahmens 20, der nicht zu dem späteren Bauteil 36 gehört, die Stärke der Folie 10 stark reduziert werden, so dass ein stärkerer Einzug der Folie 10 in den Bereich des Bauteils 36 möglich wird. Der Bereich A, der nicht zum späteren Bauteil gehört, kann beispielsweise mit einer Freiformfläche 16 versehen werden, die so ausgelegt ist, dass die Folie 10 in allen Richtungen die gleiche Dehnstrecke zurücklegen muss. Bei der Nutzung des Verfahrens zur digitalen Erzeugung einer Freiformfläche mit designierter Oberfläche können solche Bereiche, die später nicht zum Bauteil gehören, gegen Unendlich definiert werden.

Eine weitere Verbesserung kann erreicht werden, wenn zwischen Folie 10 und Werkzeug 30 das Vakuum gezielt reduziert wird. Zu diesem Zweck kann eine Vielzahl von Bohrungen 40 im Werkzeug 30 angebracht werden, von denen in Figur 9 nur eine gezeigt ist, die mit einem Fluid, beispielsweise einem Gleitmittel wie Öl oder Luft, beaufschlagt werden. Dadurch wird, wie in Figur 10 gezeigt, die Reibung zwischen der Folie 10 und dem Werkzeug 30 drastisch reduziert und hier ein Gleitpolster 42 erzeugt, während das Vakuum in anderen Bereichen die Folie 10 am Werkzeug 30 hält. Durch die im Regelfall mehreren Gleitpolster 42 können sich nun die Spannungsunterschiede innerhalb der Folie 10 weiter abbauen. Die im Tiefziehprozess eingesetzten Folien werden in der Regel nicht thermoplastisch umgeformt. Daher können die Gleitpolster 42 mehrmals und immer wieder im Wechsel angesteuert werden. Mit jeder Wiederholung des Auf- und Abbaus dieser Gleitpolster 42 reduzieren sich die Spannungsunterschiede in der Folie 10 und gehen gegen Null.

Bei dieser Ausführungsform der Erfindung kann daran gedacht werden, als Gleitmittel ein aushärtbares Medium vorzusehen, beispielsweise ein Polymer. Sobald die Spannungsrelaxation abgeschlossen ist, wird das Polymer an der Folie 10 ausgehärtet. Die Folie 10 kann nun von dem Werkzeug 30 entfernt werden, und es steht ein funktionsfähiges Formteil zur Verfügung, das im Wesentlichen in nur zwei Arbeitsschritten, nämlich der Laserung der Folie 10 zum Aufbringen der Mikrostruktur und Tiefziehen der Folie 10 hergestellt wurde. Da die Polymerschicht direkt auf dem Werkzeug hergestellt und ausgehärtet wird, entsteht ein funktionsfähiges Formteil mit einer sehr hohen Genauigkeit, die die von Silikonabgüssen oder gesinterten Abformungen oder ähnlichen Verfahren deutlich übersteigt. Das aushärtbare Medium kann wahlweise auch ein Trennmittel sein und Keramikpigmente oder ähnliches enthalten, weiter kann ein Leitlack verwendet werden, der Metallpigmente oder dergleichen enthält, um so eine anschließende Beschichtung oder Abformung zu vereinfachen.

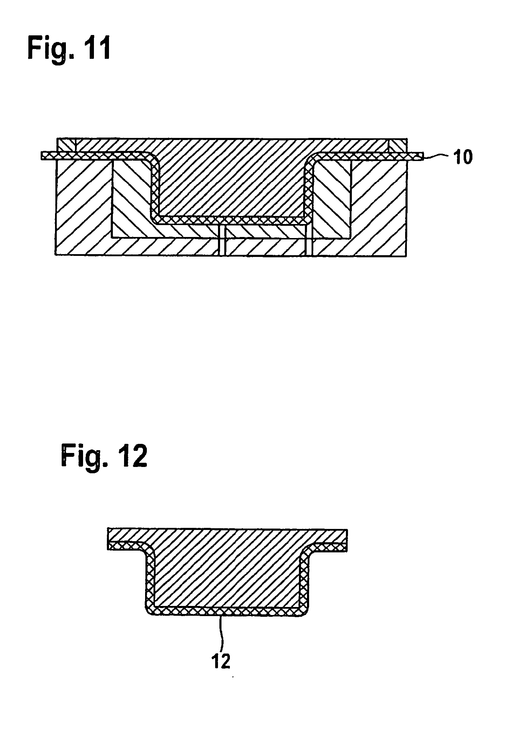

Eine Alternative, ein Bauteil herzustellen, besteht darin, wie in Figur 11 gezeigt, die Folie 10, die jetzt spannungsrelaxiert ist, zu hinterfüllen, beispielsweise mit einem schäumbaren Polymer oder einem mit Fasern verstärkten Polymer. Die homogenen, elastischen Spannungen innerhalb der Folie 10 werden durch diese Maßnahme eingefroren. Anschließend wird das Bauteil entformt. Ebenso entsteht so ein Bauteil mit höchster Maßhaltigkeit. Es steht nun, wie in Figur 12 gezeigt, ein Bauteil mit einer hochwertigen Narbstruktur auf der strukturierten Fläche 12 zur Verfügung, das als Formwerkzeug, Kopiervorlage oder als Formteil eingesetzt werden kann.

Als weiteres Beispiel soll beschrieben werden, wie das erfindungsgemäße Verfahren zum Herstellen eines Bauteiles mit einer dreidimensionalen Oberfläche genutzt werden kann, ohne dass dabei tatsächlich eine elastische Folie eingesetzt wird. In diesem Fall wird analog zum oben beschriebenen Prozess ein virtuelles Bauteil mit einer virtuellen Folie bespannt. Der daraus resultierende Datenbestand kann jetzt in ein Vektordatenmodell umgewandelt werden, das als Grundlage für ein Bauteil mit einer genarbten dreidimensionalen Freiformfläche dient.

Diese Freiformfläche kann nun über bekannte Verfahren, wie Stereolithographie, Lasersintern, Fräsen, Funkenerosion oder Laserdirektstrukturierung erzeugt werden. In der Praxis erweist sich dies jedoch als äußerst schwierig. So gibt es beispielsweise Lösungsansätze, die Bauteile über eine Laserdirektstrukturierung herzustellen. Die Führung des Laserstrahls ist dabei aufgrund der hohen benötigten Auflösung in der Praxis nicht möglich, da die orthogonale Positionierung des Laserstrahls mit einer Genauigkeit von einigen wenigen Mikrometern mit heutigen Werkzeugmaschinen bei großen Werkzeugen nicht gelingt. Ebenso ist die Positionierung des Lasers schwierig, wenn das Werkzeug über starke Aspektverhältnisse verfügt und somit nicht für einen Laser- oder Fräskopf zugänglich ist. Bei der Stereolithographie ist dies ebenso problematisch, da zum einen mit einem Laserstrahl gearbeitet wird, der über einen zentralen Spiegel das Bauteil über einen Belichtungsprozess herstellt und sich somit der Strahlquerschnitt je nach Position der zu belichtenden Bauteiloberfläche verändert. Zum anderen sind die so hergestellten Bauteile aus Fotopolymeren nicht für den Einsatz als verschleißfeste Werkzeuge geeignet. Lasergesinterte Bauteile haben im Vergleich zur Stereolithographie von Fotopolymeren zwar sehr gute Verschleißeigenschaften, zeigen jedoch weder Maßhaltigkeit noch hohe Auflösung.

Daher wird zunächst ein Stahlkern mit einem Abmaß gefräst. Das Abmaß entspricht dabei mindestens der Narbtiefe. Der Stahlkern dient dazu, der späteren Freiformfläche eine höhere Stabilität und Maßhaltigkeit zu geben. Im Folgenden Belichtungsprozess wird nun mit Hilfe des digitalen Datenbestandes die Narbung direkt auf dem Stahlkern erzeugt. Der Laser wird dabei nur in zwei Achsen bewegt, der X-Achse und der Y-Achse. Eine Z-Achse wird nur notwendig, wenn nicht im Autofokus-Modus gearbeitet wird. Die dreidimensionale Oberfläche wird nun scheibenweise abgefahren oder das Bauteil wird in eine Rotation versetzt und der Laser nur in einer Achse verfahren. Spiralbelichtung, Zeilenbelichtung und Konturbelichtung sind möglich.

Der digitale Datenbestand kann auch für andere Fertigungsverfahren, wie Frästechnologie, Funkenerosion und dergleichen, zur Werkzeugherstellung genutzt werden.

## Patentansprüche

1. Verfahren zum Erzeugen einer dreidimensionalen Freiformfläche mit haptisch oder optisch wahrnehmbaren Mikrostrukturen, wobei die Mikrostrukturen als Datensatz festgehalten sind, mit den Schritten:
a) Bereitstellen mindestens einer virtuellen oder reellen elastischen Folie (10);
b) Bestimmen der im Formprozess der Freiformfläche hervorgerufenen Dehnungen und Stauchungen in der elastischen Folie (10);
c) Modifizieren des Datensatzes, so dass die Dehnungen und Stauchungen zumindest teilweise kompensiert werden;
d) Überprüfen einer mit dem modifizierten Datensatz strukturierten elastischen Folie (10) auf Verzerrungen in den Mikrostrukturen;
e) gegebenenfalls Wiederholen der Schritte b) bis d), bis ein endgültiger Datensatz erhalten ist; und
f) Strukturieren der elastischen Folie (10), so dass mindestens eine
strukturtragende Fläche (12) auf der Folie (10) erzeugt wird,
**dadurch gekennzeichnet, dass** ein Randbereich (A) der Folie (10), der nicht zu der dreidimensionalen Freiformfläche gehört, zum Aufnehmen von Dehnungen geschwächt wird, wobei der Randbereich (A) mit einer weiteren Freiformfläche (16), die ein tiefen- und breitenvariables Profil aufweist, versehen wird, die so ausgelegt ist, dass die Folie (10) in allen Richtungen die gleiche Dehnstrecke zurücklegen muss.

2. Verfahren nach Anspruch 1, weiter mit folgenden Schritten:
- Hintergiessen der Folie (10); und
- Entformen der hintergossenen Folie (10).

## Claims

1. A method of producing a three-dimensional free-form surface with haptically and/or optically detectible microstructures that are fixed as a data set, comprising the steps of:
a) preparing at least one virtual or real elastic film (10);
b) determining the elongations and compressions in the elastic film (10) produced in a shaping process of the free-form surface;
c) modifying the data set so that the elongations and compressions are at least partially compensated;
d) checking an elastic film (10) structured with the modified data set for distortion in the microstructures;
e) if necessary, repeating steps b) through d) until a final data set is obtained; and
f) structuring the elastic film (10) so that a structure-supporting surface (12) is
produced on the film (10),
**characterized in that** an edge area (A) of film (10) which does not belong to the three-dimensional free-form surface is weakened to accommodate elongations, said edge area (A) being provided with a further free-form surface (16) having a profile variable in depth and width which is configured such that film (10) must cover the same elongation distance in all directions.

2. The method of claim 1, further comprising the following steps:
- back-casting the film (10); and
- mold releasing the back-cast film (10).

## Revendications

1. Procédé de formation d'une surface tridimensionnelle de forme arbitraire à microstructures perceptibles haptiquement ou optiquement, les microstructures étant conservées sous la forme d'un ensemble de données, comprenant les étapes suivantes :
a) la préparation d'au moins une feuille élastique virtuelle ou réelle (10) ;
b) la détermination des extensions et des compressions causées dans la feuille élastique (10) par le processus de moulage de la surface de forme arbitraire ;
c) la modification de l'ensemble de données de manière à ce que les extensions et les compressions soient compensées au moins en partie ;
d) la vérification d'une feuille élastique structurée avec l'ensemble de données modifié (10) en termes de déformations des microstructures ;
e) éventuellement la répétition des étapes b) à d) jusqu'à l'obtention d'un ensemble de données définitif ; et
f) la structuration de la feuille élastique (10) de manière à former au moins une surface portant la structure (12) sur la feuille (10),
**caractérisé en ce qu'**une zone de bord (A) de la feuille (10) qui ne fait pas partie de la surface tridimensionnelle de forme arbitraire est affaiblie pour l'absorption d'extensions, la zone de bord (A) étant munie d'une surface de forme arbitraire (16) supplémentaire présentant un profil variable en profondeur et en largeur, qui est conçue de manière à ce que la feuille (10) présente la même partie étendue dans toutes les directions.

2. Procédé selon la revendication 1, comprenant également les étapes suivantes :
- le surmoulage de la feuille (10) ; et
- le démoulage de la feuille surmoulée (10).
